(19) Europäisches Patentamt
European Patent Office
Office européen des brevets

(11) **EP 2 284 801 A1**

(12) **EUROPEAN PATENT APPLICATION**

(43) Date of publication:
**16.02.2011 Bulletin 2011/07**

(51) Int Cl.:
***G07C 5/00*** *(2006.01)*  ***F02B 77/08*** *(2006.01)*
***B60R 16/023*** *(2006.01)*

(21) Application number: **10170693.5**

(22) Date of filing: **23.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **07.08.2009 JP 2009184092**

(71) Applicant: **AISIN AW CO., LTD.**
**Anjo-shi, Aichi 444-1192 (JP)**

(72) Inventors:
• **Konishi, Teru**
 **Aichi 444-1192 (JP)**
• **Nishita, Kanako**
 **Aichi 444-1192 (JP)**
• **Ueno, Yusuke**
 **Aichi 444-1192 (JP)**

(74) Representative: **Kramer - Barske - Schmidtchen**
**European Patent Attorneys**
**Landsberger Strasse 300**
**80687 München (DE)**

(54) **Vehicle operation diagnostic device, method, computer program and computer readable medium**

(57)    A vehicle operation diagnostic device comprising an idling stop detection unit (41) that detects an idling stop of a vehicle, an engine-start fuel acquisition unit (41) that acquires an engine-start fuel consumption, a tentative fuel acquisition unit (4) that acquires, if the idling stop detection unit (41) detects the vehicle performing the idling stop, a tentative fuel consumption that is an amount of fuel consumed when idling is continued during a period in which the idling stop is performed, a reduction effect determination unit (41) that determines whether a fuel consumption reduction effect is obtained by the vehicle performing the idling stop compared to continuing idling, based on the engine-start fuel consumption and the tentative fuel consumption, and a determination result guidance unit (41) that provides guidance based on a determination result of the reduction effect determination unit (41).

**Description**

The present invention relates to a vehicle operation diagnostic device that diagnoses an operation related to an idling stop of a vehicle, a vehicle operation diagnostic method, and a computer program.

Recently, in order to increase drivers' awareness of environmental issues and promote more environmentally-friendly driving, there is a system that diagnoses whether a vehicle operation performed by the driver during travel is appropriate in consideration of the environment. Here, an idling stop is a state in which the engine is stopped during idling as the driver waits for a traffic signal to turn green or the like. In addition to reducing emissions discharged from the vehicle, an idling stop can also reduce the amount of gasoline consumed. Therefore, the idling stop is an important vehicle operation from an environmental standpoint.

JP-A-2005-222417 (pages 11 and 12, FIG. 13) describes a system that assigns points when the vehicle performs an idling stop at a point (such as an intersection or a rail crossing) where performing an idling stop is preferred, and evaluates a vehicle operation that considers the driver's environment.

However, in the system described in JP-A-2005-222417, a determination regarding whether an effect of less fuel consumption has actually been achieved by an idling stop is not used as evaluation criteria. The fuel consumption per unit time when starting the engine is known to be higher than the fuel consumption per unit time when continuously driving the engine. In other words, sometimes the amount of fuel required for restarting the engine from an idling stop state is larger than the reduced fuel consumption during an idling stop. In such cases, the effect of less fuel consumption cannot be obtained even if an idling stop is performed.

Thus, in the system described in JP-A-2005-222417, a vehicle operation performed by the driver may be evaluated as environmentally appropriate even when the effect of less fuel consumption is not achieved by performing the idling stop. Consequently, it is not possible to correctly evaluate whether the vehicle operation performed by the driver is environmentally appropriate.

The present invention was devised in order to solve the above problem with related art. The present invention provides a vehicle operation diagnostic device according to claim 1 which correctly evaluates whether a vehicle operation performed by a driver is environmentally appropriate by taking into consideration whether an effect of less fuel consumption was obtained by performing an idling stop, as well as a vehicle operation diagnostic method according to claim 6, a computer program according to claim 11 and a computer readable medium according to claim 12. Further developments are given in the dependent claims.
Note that the term "idling stop" refers to a situation in which the vehicle is idling with the engine stopped at an intersection, a rail crossing, or the like.

In the vehicle operation diagnostic device according to a first aspect, whether a fuel consumption reduction effect was obtained by performing the idling stop is taken into consideration when evaluating the driver's vehicle operation related to the idling stop. Therefore, it is possible to correctly evaluate whether the vehicle operation performed by the driver is environmentally appropriate.

In the vehicle operation diagnostic device according to a second aspect, even if the idling stop is performed in the vehicle, the fuel consumption during idling without the idling stop can be accurately calculated, making it possible to accurately determine whether a fuel consumption reduction effect was obtained. Thus, it is possible to correctly evaluate whether the vehicle operation performed by the driver is environmentally appropriate.

In the vehicle operation diagnostic device according to a third aspect, at a position where a fuel consumption reduction effect was not obtained before by the vehicle performing the idling stop, guidance related to the idling stop is provided when the vehicle arrives at the same position again. Therefore, guidance related to the idling stop can be provided at a position where such guidance is needed, and the driver can be encouraged to perform an operation related to an idling stop that is environmentally appropriate.

In the vehicle operation diagnostic method according to a fourth aspect, whether a fuel consumption reduction effect was obtained by performing the idling stop is taken into consideration when evaluating the driver's vehicle operation related to the idling stop. Therefore, it is possible to correctly evaluate whether the vehicle operation performed by the driver is environmentally appropriate.

In the computer program according to the fifth aspect, whether a fuel consumption reduction effect was obtained by performing the idling stop is taken into consideration in a computer when evaluating the driver's vehicle operation related to the idling stop. Therefore, it is possible to correctly evaluate whether the vehicle operation performed by the driver is environmentally appropriate.

FIG. 1 is a block diagram that shows a navigation device according to an embodiment;
FIG. 2 is a schematic diagram that shows a storage area of a non-reduction position storage database;
FIG. 3 is a flowchart of a vehicle operation diagnostic processing program according to the embodiment;
FIG. 4 is a drawing that shows an example of guidance regarding an effective idling stop time by the navigation device;
FIG. 5 is a flowchart of a sub processing program of a tentative fuel consumption acquisition process according to the embodiment;
FIG. 6 is a flowchart of an idling stop determination processing program according to the embodiment; and

FIG. 7 is a drawing that shows an example of guidance regarding the effective idling stop time by the navigation device.

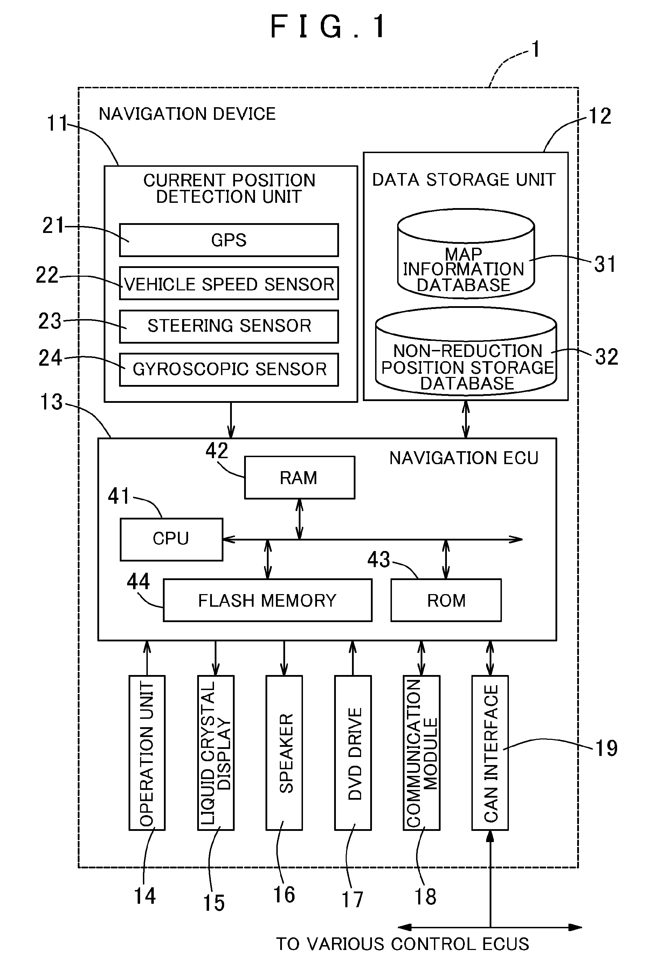

A specific embodiment of a vehicle operation diagnostic device that is realized in a navigation device will be described in detail below with reference to the drawings. First, an overall configuration of a navigation device 1 according to the present embodiment will be explained using FIG. 1. FIG. 1 is a block diagram that shows the navigation device 1 according to the present embodiment.

As shown in FIG. 1, the navigation device 1 according to the present embodiment is constituted by a current position detection unit 11 that detects a current vehicle position; a data storage unit 12 that stores various data; a navigation electronic control unit (ECU) 13 that performs various computational processing based on input information; an operation unit 14 that accepts an operation from the user; a liquid crystal display 15 that displays for the user a map, various information related to guidance regarding a diagnostic result from diagnosing a vehicle operation performed by the driver, and the like; a speaker 16 that outputs voice guidance related to route guidance; a DVD drive 17 that reads a DVD serving as a storage medium that stores programs; a communication module 18 that performs communication with an information center such as a traffic information center; and a controller area network (CAN) interface 19.

Each of the configuring elements of the navigation device 1 will be explained in order below.
The current position detection unit 11 includes a GPS 21, a vehicle speed sensor 22, a steering sensor 23, a gyroscopic sensor 24, an altimeter (not shown in the drawing), and the like, and is capable of detecting the vehicle's current position, heading, running speed, and the like. The vehicle speed sensor 22, in particular, is a sensor for detecting the vehicle's speed and distance traveled. The vehicle speed sensor 22 generates a pulse in response to the rotation of the vehicle's wheels and outputs a pulse signal to the navigation ECU 13. The navigation ECU 13 counts the generated pulses to compute the revolution speed of the wheels and the distance traveled. Note that it is not necessary for the navigation device 1 to be provided with all of the four types of sensors described above, and it is acceptable for the navigation device 1 to be provided with only one or a plurality among the four types of sensors.

The data storage unit 12 includes a hard disk (not shown in the drawing) serving as an external storage device and recording medium, and a read/write head (not shown in the drawing) serving as a drive for reading a map information database 31, a non-reduction position storage database 32, predetermined programs, and so on from the hard disk and writing predetermined data to the hard disk.

The map information database 31 stores various types of map data that are necessary for route guidance, traffic information guidance, and map displays. Specifically, the map data includes link data that pertains to the shapes of roads (links), node data that pertains to node points, POI data that pertains to points such as facilities, intersection data that pertains to various intersections, search data for finding routes, search data for finding geographical points, and image drawing data for drawing images of maps, roads, traffic information, and the like on the liquid crystal display 15.
Note that the map information database 31 is updated based on update data provided through a storage medium (such as a DVD or a memory card) or update data distributed from a map distribution center or the like.

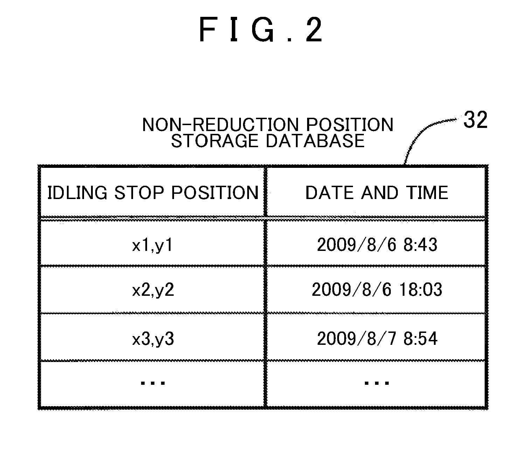

The non-reduction position storage database 32 is a storage unit that cumulatively stores vehicle positions at which an idling stop was performed or the like, when the navigation ECU 13 determines that a fuel consumption reduction effect was not obtained by the vehicle performing the idling stop. For example, FIG. 2 is a drawing that shows an example of a storage area of the non-reduction position storage database 32. As shown in FIG. 2, the non-reduction position storage database 32 stores position coordinates at which idling stops were performed and determined as not obtaining a fuel consumption reduction effect, and the dates and times when the idling stops were performed.
The navigation ECU 13 provides guidance related to the idling stop when the vehicle arrives at a position stored in the non-reduction position storage database 32 as described later. Note that the determination regarding whether a fuel consumption reduction effect was obtained by performing the idling stop will be explained in detail later.
Further note that, here, "idling" refers to a state in which the vehicle is stopped with the engine still turned on, whereas an "idling stop" refers to a state in which the engine is turned off during idling.

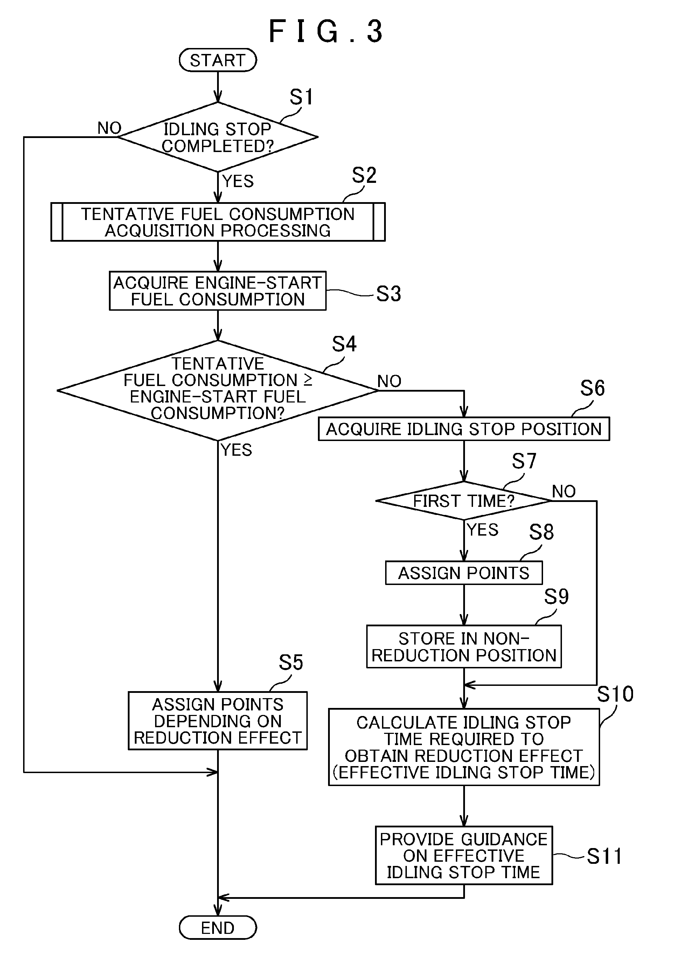

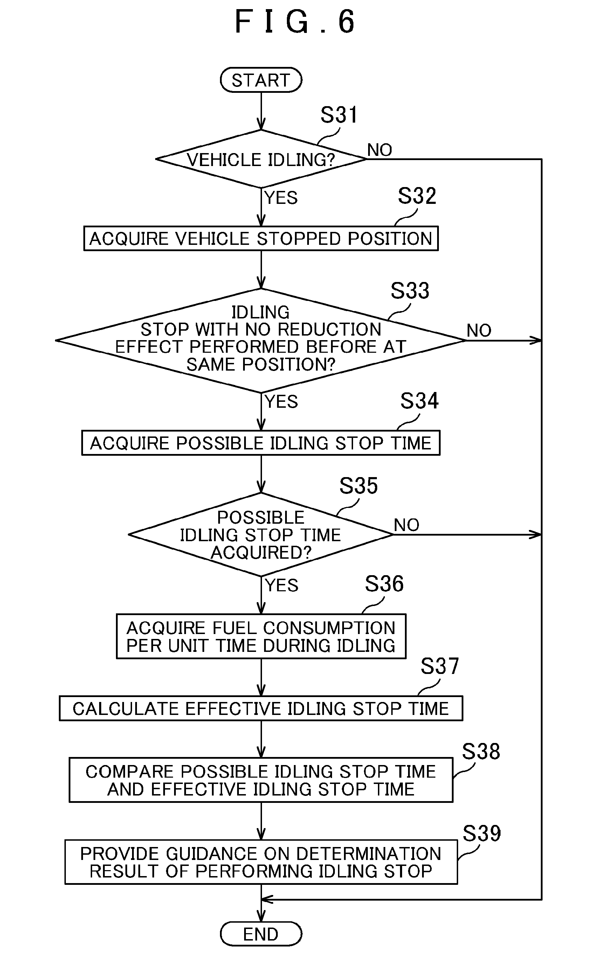

The navigation ECU 13 is an electronic control unit that performs overall control of the navigation device 1, including guidance route setting processing that sets a guidance route from the current position to a destination when a destination has been selected, vehicle operation diagnostic processing that diagnoses whether an operation related to an idling stop performed by the driver is environmentally appropriate, and idling stop guidance processing that provides guidance regarding whether the vehicle should perform an idling stop. The navigation ECU 13 has a CPU 41 serving as a computational device and a control device; the CPU 41 comprises an idling stop detection unit, an engine-start fuel acquisition unit, a tentative fuel acquisition unit, a reduction effect determination unit, a determination result guidance unit, a period acquisition unit, a unit fuel consumption unit, a vehicle position acquisition unit, a position storage unit, a non-reduction position guidance unit, an effective idling stop time acquisition unit, an effective idling stop time guidance unit, a possible idling stop time acquisition unit and an idling stop guidance unit; a RAM 42 which is used as a working memory when the CPU 41 performs various types of computational processing, and also stores route data and the like when a route has been found; a ROM 43 storing control programs as well as a vehicle operation diagnostic program including a vehicle operation diagnostic processing program (see FIG. 3) and an idling stop determination processing program (see FIG. 6); and an internal storage device such as a flash memory 44 for storing programs read from the ROM 43. Furthermore, the programs may be stored on a computer readable medium and read out by e.g. the DVD-device 17.

The operation unit 14 is operated at times such as when a place of departure is input as a travel start point and a destination is input as a travel end point, and includes a plurality of operation switches (not shown in the drawing), such as various types of keys, buttons, and the like. Based on switch signals that are output by operating the various operation switches, such as by pressing or the like, the navigation ECU 13 controls the various types of corresponding operations that are executed. Note that the operation unit 14 can also be configured as a touch panel that is provided on the front surface of the liquid crystal display 15.

The liquid crystal display 15 displays a map image that includes roads, traffic information, operation guidance, an operation menu, key guidance, a guidance route from the place of departure to the destination, guidance information along the guidance route, news, a weather forecast, the time, e-mail, a television program, and the like. A diagnostic result after performing a diagnosis of an operation related to an idling stop performed by the driver is also displayed.

The speaker 16 outputs traffic information guidance and voice guidance for guiding travel along the guidance route on the basis of an instruction from the navigation ECU 13. Voice guidance for a diagnostic result after performing a diagnosis of an operation related to an idling stop performed by the driver is also output.

The DVD drive 17 is a drive capable of reading data stored on a recording medium such as a DVD or a CD. The map information database 31 is updated and the like based on the data that is read.

The communication module 18 is a communication device, such as a mobile telephone or a DCM, for example, that receives traffic information that is transmitted from a traffic information center, such as the Vehicle Information and Communication System (VICS (registered trademark)) center, a probe center, or the like, for example. The traffic information includes various types of information, such as congestion information, regulatory information, and traffic accident information. In the present embodiment, information pertaining to the lighting mode of a traffic signal installed on the road and the operation status of a crossing gate installed at a rail crossing is also received from an information center or the like through the communication module 18.

The CAN interface 19 is an interface that inputs and outputs data to and from a CAN, which is an on-vehicle network standard according to which multiplex communication between various control ECUs installed in the vehicle is performed. Through the CAN, the navigation ECU 13 is intercommunicably connected to the various control ECUs that control the vehicle (e.g. a brake control ECU, an engine control ECU, and a front camera control ECU). The navigation ECU 13 also diagnoses a vehicle operation performed by the driver, as described later, based on various types of data acquired from the various control ECUs through the CAN (such as a braking amount, an engine driving condition, remaining fuel, a coolant temperature, an engine temperature, a lighting mode of a traffic signal, an operation status of a crossing gate, and the like).

Next, the vehicle operation diagnostic processing program that is executed in the navigation device 1 having the above configuration will be explained based on FIG. 3. FIG. 3 is a flowchart of the vehicle operation diagnostic processing program according to the present embodiment. Here, the vehicle operation diagnostic processing program is executed at a predetermined time interval (e.g. every 200 ms) once the vehicle power is turned on, and is a program that diagnoses whether an operation related to an idling stop performed by the vehicle is environmentally appropriate. Note that the programs below shown in the flowcharts of FIGS. 3, 5, and 6 are stored in the RAM 42, the ROM 43, or the like provided in the navigation ECU 13, and executed by the CPU 41.

In the vehicle operation diagnostic processing program, first, at step (abbreviated to "S" below) 1, the CPU 41 determines whether the vehicle has completed performing an idling stop (that is, whether an idling stop was performed and the engine subsequently started). Specifically, based on the current vehicle position detected by the current position detection unit 11, the detection result of the vehicle speed sensor 22, the engine driving condition acquired through the CAN, and the like, the CPU 41 (1) detects that the vehicle speed is zero, (2) detects that the engine has been subsequently stopped, and (3) determines that the vehicle has completed performing an idling stop when it is detected thereafter that the engine has been restarted.

If it is determined that the vehicle has completed performing an idling stop (S1: YES), then the routine proceeds to S2. However, if it is determined that the vehicle has not completed performing an idling stop (S1: NO), then the vehicle operation diagnostic processing program is ended.

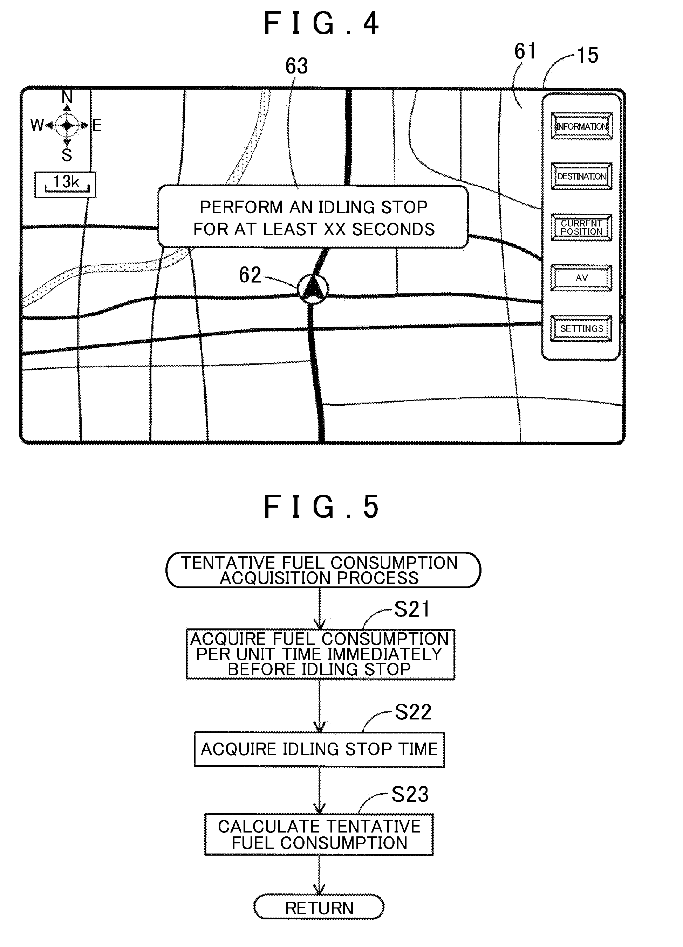

Next, at S2, the CPU 41 executes a tentative fuel consumption acquisition process (FIG. 5) that will be described later. Here, the tentative fuel consumption acquisition process acquires an amount of fuel consumption under the assumption that idling is continued during the period in which the idling stop is performed.

At S3, the CPU 41 acquires an amount of fuel consumption (hereinafter referred to as an "engine-start fuel consumption") that is required for starting the engine after the vehicle has performed an idling stop. Note that the engine-start fuel consumption is acquired based on a fuel difference before and after the engine is started, which is acquired through the CAN. Further note that the engine-start fuel consumption may use a fixed value that is set per vehicle model.

Then, at S4, the CPU 41 compares the tentative fuel consumption acquired at S2 and the engine-start fuel consumption acquired at S3. Based on this comparison, the CPU 41 determines whether the tentative fuel consumption is equal to or greater than the engine-start fuel consumption, that is, whether a fuel consumption reduction effect has been obtained by the vehicle performing the idling stop compared to continuing idling.

If it is determined that the tentative fuel consumption is equal to or greater than the engine-start fuel consumption (S4: YES), that is, if it is determined that a fuel consumption reduction effect has been obtained by the vehicle performing the idling stop compared to continuing idling, the routine proceeds to S5. However, if it is determined that the tentative fuel consumption is less than the engine-start fuel consumption (S4: NO), that is, if it is determined that a fuel consumption reduction effect has not been obtained by the vehicle performing the idling stop compared to continuing idling, the routine proceeds to S6.

Next, at S5, which is executed when there is a diagnosis that a fuel consumption reduction effect has been obtained by the vehicle performing the idling stop compared to continuing idling, the CPU 41 assigns points to the user in accordance with the reduction effect. Here, the assigned points are used to evaluate the driver's degree of environmental contribution. Specifically, at S5, the CPU 41 uses the liquid crystal display 15 and/or the speaker 16 to provide guidance regarding the assigned number of points. Note that the assigned number of points is cumulatively added, and the current cumulative value is stored in the RAM 42 or the like. In addition, if the user performs a prescribed operation, guidance is provided using the liquid crystal display 15 and/or the speaker 16 regarding the current cumulative value. For the number of points assigned at S5, a greater number of points is preferably assigned for a larger fuel consumption reduction effect obtained by performing the idling stop.
The navigation device 1 then provides the user with advice related to a vehicle operation in a form that is based on the cumulative value of the current number of points during normal driving of the vehicle. For example, if the cumulative value of the number of points is less than a prescribed value, advice suggesting that the user drive in a more environmentally-friendly manner is provided a greater number of times.

Meanwhile, at S6, which is executed when there is a diagnosis that a fuel consumption reduction effect has not been obtained by the vehicle performing the idling stop compared to continuing idling, the CPU 41 first uses the current position detection unit 11 to acquire the vehicle position at which the idling stop was performed (i.e., the current vehicle position).

Next, at S7, the CPU 41 reads the position data stored in the non-reduction position storage database 32, and determines whether coordinates for the same position as the vehicle position at which the idling stop was performed, which was acquired at S6, are already stored. Namely, the CPU 41 determines whether this is the first time a fuel consumption reduction effect was not obtained at this idling stop position.

If it is determined that this is the first time a fuel consumption reduction effect was not obtained at this idling stop position (S7: YES), then the routine proceeds to S8. However, if it is determined that this is not the first time a fuel consumption reduction effect was not obtained at this idling stop position (S7: NO), then the routine proceeds to S10.

At S8, the CPU 41 makes a diagnosis that a fuel consumption reduction effect has not been obtained by the vehicle performing the idling stop compared to continuing idling, and assigns points to the user. Here, similar to S5, the assigned points are used to evaluate the driver's degree of environmental contribution. However, the assigned number of points is preferably less compared to S5. For example, the assigned number of points at S8 may be half of the lowest number of points assigned at S5. Thus, points can be suitably assigned to the user's driving operation. Based on the point cumulative value, advice can then be suitably provided.

Next, at S9, the CPU 41 stores in the non-reduction position storage database 32 (see FIG. 2) data for the vehicle position coordinates at which the idling stop was performed, which was acquired at S6, as data for idling stop position coordinates where a fuel consumption reduction effect was determined as not obtained.

At S10, the CPU 41 calculates an idling stop time (hereinafter referred to as an "effective idling stop time") for the idling stop performed this time, which is required for obtaining a fuel consumption reduction effect compared to when idling is continued. Specifically, based on a fuel consumption per unit time of the vehicle immediately before the idling stop is performed and the engine-start fuel consumption acquired at S3, the CPU 41 calculates an idling stop time required to fulfill the condition of the tentative fuel consumption being equal to or greater than the engine-start fuel consumption as the effective idling stop time. More specifically, the effective idling stop time is calculated using Equation 1 below.

$$T \geq S/A \quad (1)$$

where,
T: effective idling stop time,
S: engine-start fuel consumption, and

A: fuel consumption per unit time immediately before performing the idling stop.

Next, at S11, the CPU 41 provides guidance regarding the effective idling stop time calculated at S10. Specifically, guidance for the effective idling stop time is displayed on the liquid crystal display 15 and/or output by voice using the speaker 16.

FIG. 4 is a drawing that shows a guidance screen 61 that is displayed on the liquid crystal display 15 of the navigation device 1 at S11. As shown in FIG. 4, in addition to a map image of the vehicle surroundings, a vehicle position mark 62 that indicates the vehicle position and an advice window 63 are displayed on the guidance screen 61. The advice window 63 shows text that provides guidance regarding the effective idling stop time calculated at S10. For example, in the example shown in FIG. 4, the text "Perform an idling stop for at least XX seconds" is displayed.

By referring to the guidance screen 61, the user can know that the idling stop performed this time did not obtain a fuel consumption reduction effect and also know the effective idling stop time required for obtaining a fuel consumption reduction effect.

Next, a sub processing program of the tentative fuel consumption acquisition process executed at S2 will be explained based on FIG. 5. FIG. 5 is a flowchart of a sub processing program of the tentative fuel consumption acquisition process according to the present embodiment.

First, at S21, the CPU 41 acquires a fuel consumption per unit time of the vehicle immediately before performing the idling stop (hereinafter referred to as a "unit fuel consumption") using the CAN or the like.

Next, at S22, the CPU 41 acquires a period during which the vehicle performed the idling stop (hereinafter referred to as an "idling stop period"). Specifically, the CPU 41 uses a timer or the like to measure the amount of time passed from detection of the start of the idling stop to detection of the completion of the idling stop.

At S23, based on the unit fuel consumption acquired at S21 and the idling stop period acquired at S22, the CPU 41 then calculates the tentative fuel consumption under the assumption that idling is continued during the period in which the idling stop is performed. Specifically, the tentative fuel consumption is calculated using Equation 2 below.

$$X = M \times Y \quad (2)$$

where,
X: tentative fuel consumption,
M: unit fuel consumption, and
Y: idling stop period.
The processing at S3 onward is then executed using the tentative fuel consumption calculated at S23.

Next, the idling stop determination processing program that is executed in the navigation device 1 will be explained based on FIG. 6. FIG. 6 is a flowchart of the idling stop determination processing program according to the present embodiment. Here, the idling stop determination processing program is executed at a predetermined time interval (e.g. every 200 ms) once the vehicle power is turned on, and is a program that provides guidance on whether the vehicle should perform an idling stop.

In the idling stop determination processing program, first, at S31, the CPU 41 determines whether the vehicle is idling based on information acquired from the CAN and the detection result of the vehicle speed sensor 22.

If it is determined that the vehicle is idling (S31: YES), then the routine proceeds to S32. However, if it is determined that the vehicle is not idling (S31: NO), then the idling stop determination processing program is ended.

At S32, the CPU 41 uses the current position detection unit 11 to acquire the stopped position of the vehicle (i.e., the current vehicle position).

Next, at S33, the CPU 41 reads the position data stored in the non-reduction position storage database 32, and determines whether coordinates for the same position as the vehicle stopped position acquired at S32 are already stored. Namely, the CPU 41 determines whether the vehicle is idling at a position where the vehicle performed an idling stop before and where the vehicle operation diagnostic processing program (FIG. 3) made a diagnosis that a fuel consumption reduction effect was not obtained.

If it is determined that coordinates for the same position as the vehicle stopped position are already stored in the non-reduction position storage database 32 (S33: YES), that is, if it is determined that the vehicle is idling at a position where the vehicle performed an idling stop before and where the vehicle operation diagnostic processing program made a diagnosis that a fuel consumption reduction effect was not obtained, the routine proceeds to S34. However, if it is determined that coordinates for the same position as the vehicle stopped position are not already stored in the non-reduction position storage database 32 (S33: NO), that is, if it is determined that the vehicle is not idling at a position where the vehicle performed an idling stop before and where the vehicle operation diagnostic processing program made a diagnosis that a fuel consumption reduction effect was not obtained, the idling stop determination processing program is ended.

Next, at S34, the CPU 41 acquires a time during which the idling vehicle can perform the idling stop (hereinafter referred to as a "possible idling stop time").

Specifically, first , the CPU 41 determines the cause of the vehicle stopping based on an image taken by a front camera installed at the front of the vehicle, which was acquired through the CAN. If it is consequently determined that the vehicle is stopped due to a red traffic light, for example, the CPU 41 receives information related to the lighting mode of the traffic signal from an information center or the like through the communication module 18, and specifies a time until the traffic signal turns green. The specified time is thus acquired as the possible idling stop time.

Alternatively, if it is determined that the vehicle is stopped due to the operation of a crossing gate at a rail crossing, for example, the CPU 41 receives information related to the operation status of the crossing gate from an information center or the like through the communication module 18, and specifies a time until the crossing gate is raised. The specified time is thus acquired as the possible idling stop time.

Next, at S35, the CPU 41 determines whether the possible idling stop time has been acquired at S34. If it is determined that the possible idling stop time has been acquired (S35: YES), then the routine proceeds to S36. However, if it is determined that the possible idling stop time has not been acquired (S35: NO), the idling stop determination processing program is ended without providing guidance.

At S36, the CPU 41 acquires a fuel consumption per unit time during idling until the vehicle starts traveling (hereinafter referred to as a "unit estimated fuel consumption") from the current fuel consumption per unit time of the vehicle. Specifically, the CPU 41 assumes that the vehicle fuel consumption per unit time during idling will not change, and acquires the current vehicle fuel consumption per unit time as the unit estimated fuel consumption.

At S37, the CPU 41 calculates an idling stop time (hereinafter referred to as an "effective idling stop time"), which is required for obtaining a fuel consumption reduction effect by the idling vehicle performing the idling stop compared to continuing idling. Specifically, based on the unit estimated fuel consumption acquired at S36 and an estimated engine-start fuel consumption required for the engine of the vehicle to start, the CPU 41 calculates an idling stop time required to fulfill the condition of the tentative fuel consumption being equal to or greater than the engine-start fuel consumption as the effective idling stop time. More specifically, the effective idling stop time is calculated using Equation 3 below.

$$T \geq S'/A' \quad (3)$$

where,
T: effective idling stop time,
S': estimated engine-start fuel consumption, and
A': unit estimated fuel consumption.
Note that the estimated engine-start fuel consumption required for the engine of the vehicle to start is calculated from a past history and acquired as a fixed value.

Next, at S38, the CPU 41 compares the possible idling stop time acquired at S34 and the effective idling stop time calculated at S37. If the CPU 41 determines that the possible idling stop time is equal to or greater than the effective idling stop time, the CPU 41 makes a diagnosis that performing the idling stop in the vehicle is the environmentally appropriate vehicle operation. However, if the CPU 41 determines that the possible idling stop time is less than the effective idling stop time, the CPU 41 makes a diagnosis that not performing the idling stop in the vehicle is the environmentally appropriate vehicle operation.

At S39, the CPU 41 provides guidance regarding whether the vehicle should perform the idling stop based on the comparison result at S38. Specifically, if it is determined at S38 that the possible idling stop time is equal to or greater than the effective idling stop time, performing the idling stop in the vehicle is diagnosed as the environmentally appropriate vehicle operation. Accordingly, guidance that recommends performing the idling stop is displayed on the liquid crystal display 15 and/or output by voice using the speaker 16. However, if it is determined at S38 that the possible idling stop time is less than the effective idling stop time, not performing the idling stop in the vehicle is diagnosed as the environmentally appropriate vehicle operation. Accordingly, guidance that recommends not performing the idling stop is displayed on the liquid crystal display 15 and/or output by voice using the speaker 16.

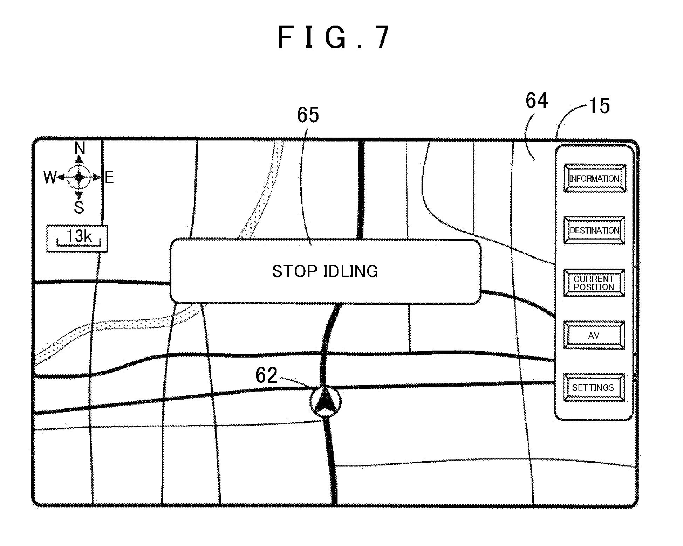

FIG. 7 is a drawing that shows a guidance screen 64 that is displayed on the liquid crystal display 15 of the navigation device 1 at S39. As shown in FIG. 7, in addition to a map image of the vehicle surroundings, the vehicle position mark 62 that indicates the vehicle position and an advice window 65 are displayed on the guidance screen 64. The advice window 65 shows text that provides guidance recommending that the idling stop be performed or not performed based on the comparison result at S38. The example shown in FIG. 7 is the guidance screen 64 displayed when a diagnosis is made that performing the idling stop in the vehicle is the environmentally appropriate vehicle operation, and the text "Stop idling" is displayed on the advice window 65.

By referring to the guidance screen 64, the user can know whether idling should be stopped.

As described in detail above, in the navigation device 1 according to the present embodiment, a vehicle operation diagnostic method performed by the navigation device 1, and a computer program executed by the navigation ECU 13 of the navigation device 1, if the vehicle has performed an idling stop, the tentative fuel consumption is acquired that is an amount of fuel consumed during the period in which the idling stop was performed (S2). The engine-start fuel consumption that is an amount of fuel required for the engine of the vehicle to start is also acquired (S3). By comparing the acquired engine-start fuel consumption and the tentative fuel consumption, it is determined whether a fuel consumption reduction effect has been obtained by the vehicle performing the idling stop compared to continuing idling (S4). Guidance is then provided based on the determination result (S5, S8 to S11). Therefore, the driver's vehicle operation related to the idling stop can be evaluated in consideration of whether a fuel consumption reduction effect has been obtained by performing the idling stop. Thus, it is possible to correctly evaluate whether the vehicle operation performed by the driver is environmentally appropriate.

In addition, a value found by multiplying the stop period, during which the vehicle performed the idling stop, and the unit fuel consumption, which is the vehicle fuel consumption per unit time, is acquired as the tentative fuel consumption (S23). Therefore, even if the idling stop is performed in the vehicle, the fuel consumption during idling without the idling stop can be accurately calculated, making it possible to accurately determine whether a fuel consumption reduction effect was obtained. Thus, it is possible to correctly evaluate whether the vehicle operation performed by the driver is environmentally appropriate.

At a position where a fuel consumption reduction effect was not obtained before by the vehicle performing the idling stop, guidance related to the idling stop is provided when the vehicle arrives at the same position again (S39). Therefore, guidance related to the idling stop can be provided at a position where such guidance is needed, and the driver can be encouraged to perform an operation related to an idling stop that is environmentally appropriate.

Further, guidance is provided based on the result of comparing the effective idling stop time and the possible idling stop time in a situation where the vehicle is idling and able to perform an idling stop (S39). Therefore, the vehicle can be made to perform an operation related to an idling stop that is environmentally appropriate.

Note that the present invention is not limited to the embodiment described above, and may of course be subjected to various improvements and modifications within a scope that does not depart from the spirit of the present invention.

For example, when calculating the effective idling stop time at S37 in the present embodiment, the current fuel consumption per unit time of the vehicle was used in the above Equation 3 to calculate the effective idling stop time. However, the effective idling stop time may also be a fixed value that is set per vehicle model. The fixed value may further be a value that changes depending on the season. In addition, a past vehicle travel history and fuel consumption history may be used to calculate the effective idling stop time.

Application of the present invention is not limited to a gasoline vehicle that uses a gasoline engine as a drive source; the present invention may also be applied to an electric vehicle that uses a motor as a drive source, and a hybrid vehicle that uses both a gasoline engine and a motor as drive sources.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1. A vehicle operation diagnostic device comprising
an idling stop detection unit (41) that is adapted to detect an idling stop of a vehicle,
an engine-start fuel acquisition unit (41) that is adapted to acquire an engine-start fuel consumption that is a fuel consumption required for an engine of the vehicle to start,
a tentative fuel acquisition unit (41) that is adapted to acquire, if the idling stop detection unit (41) detects the vehicle performing the idling stop, a tentative fuel consumption that is an amount of fuel consumed when idling is continued during a period in which the idling stop is performed,
a reduction effect determination unit (41) that is adapted to determine whether a fuel consumption reduction effect is obtained by the vehicle performing the idling stop compared to continuing idling, based on the engine-start fuel consumption and the tentative fuel consumption, and
a determination result guidance unit (41) that is adapted to provide guidance based on a determination result of the reduction effect determination unit (41).

2. The vehicle operation diagnostic device according to claim 1, wherein
the tentative fuel acquisition unit comprises
a period acquisition unit (41) that is adapted to acquire a stop period during which the idling stop of the vehicle is performed, and
a unit fuel consumption acquisition unit (41) that is adapted to acquire a unit fuel consumption that is a fuel consumption per unit time of the vehicle immediately before the idling stop of the vehicle is performed, wherein
a value found by multiplying the stop period and the unit fuel consumption is acquired as the tentative fuel consumption.

3. The vehicle operation diagnostic device according to claim 1 or 2, further comprising
a vehicle position acquisition unit (41) that is adapted to acquire a position of the vehicle,
a position storage unit (41) that is adapted to store, when the reduction effect determination unit (41) determines that a fuel consumption reduction effect was not obtained by performing the idling stop, the position of the vehicle at which the idling stop was performed, and

a non-reduction position guidance unit (41) that is adapted to provide guidance related to the idling stop when the vehicle arrives at a position stored in the position storage unit (41).

4. The vehicle operation diagnostic device according to any one of claims 1 to 3, further comprising an effective idling stop time acquisition unit (41) that is adapted to acquire an effective idling stop time which is required for obtaining a fuel consumption reduction effect, and an effective idling stop time guidance unit (41) that is adapted to provide guidance related to the effective idling stop time.

5. The vehicle operation diagnostic device according to claim 4, further comprising a possible idling stop time acquisition unit (41) that is adapted to acquire a possible idling stop time during which the vehicle can perform the idling stop, and an idling stop guidance unit (41) is adapted to provide guidance related to the idling stop based on the possible idling stop time and the effective idling stop time.

6. A vehicle operation diagnostic method comprising the steps of detecting an idling stop of a vehicle, acquiring an engine-start fuel consumption that is a fuel consumption required for an engine of the vehicle to start, acquiring, if the idling stop of the vehicle is detected at the idling stop detection step, a tentative fuel consumption that is an amount of fuel consumed when idling is continued during a period in which the idling stop is performed, determining whether a fuel consumption reduction effect is obtained by the vehicle performing the idling stop compared to continuing idling, based on the engine-start fuel consumption and the tentative fuel consumption, and providing guidance based on a determination result of the reduction effect determination step.

7. The vehicle operation diagnostic method according to claim 6, wherein the step of acquiring a tentative fuel consumption comprises acquiring a stop period during which the idling stop of the vehicle is performed, and acquiring a unit fuel consumption that is a fuel consumption per unit time of the vehicle immediately before the idling stop of the vehicle is performed, wherein a value found by multiplying the stop period and the unit fuel consumption is acquired as the tentative fuel consumption.

8. The vehicle operation diagnostic method according to claim 6 or 7, further comprising the steps of acquiring a position of the vehicle, storing, when it is determined that a fuel consumption reduction effect was not obtained by performing the idling stop, the position of the vehicle at which the idling stop was performed in a position storage unit (41), and providing guidance related to the idling stop when the vehicle arrives at a position stored in the position storage unit (41).

9. The vehicle operation diagnostic method according to any one of claims 6 to 8, further comprising the steps of acquiring an effective idling stop time which is required for obtaining a fuel consumption reduction effect, and providing guidance related to the effective idling stop time.

10. The vehicle operation diagnostic method according to claim 9, further comprising the steps of acquiring a possible idling stop time during which the vehicle can perform the idling stop, and providing guidance related to the idling stop based on the possible idling stop time and the effective idling stop time.

11. A vehicle operation diagnostic program comprising program code which, when run on a computer causes the computer to perform the steps according to any one of method claims 6 to 10.

12. A computer readable medium comprising computer readable instructions containing a program according to claim 11.

# F I G . 1

NAVIGATION DEVICE — 1

11 — CURRENT POSITION DETECTION UNIT

21 — GPS

22 — VEHICLE SPEED SENSOR

23 — STEERING SENSOR

24 — GYROSCOPIC SENSOR

12 — DATA STORAGE UNIT

MAP INFORMATION DATABASE — 31

NON-REDUCTION POSITION STORAGE DATABASE — 32

13 — NAVIGATION ECU

42 — RAM

41 — CPU

44 — FLASH MEMORY

43 — ROM

14 — OPERATION UNIT

15 — LIQUID CRYSTAL DISPLAY

16 — SPEAKER

17 — DVD DRIVE

18 — COMMUNICATION MODULE

19 — CAN INTERFACE

TO VARIOUS CONTROL ECUS

# F I G . 2

NON-REDUCTION POSITION
STORAGE DATABASE — 32

| IDLING STOP POSITION | DATE AND TIME |
|---|---|
| x1,y1 | 2009/8/6 8:43 |
| x2,y2 | 2009/8/6 18:03 |
| x3,y3 | 2009/8/7 8:54 |
| ... | ... |

# F I G . 3

```
                    ( START )
                        │
                        ▼
              S1  ◇ IDLING STOP ◇   NO
         ┌──────── COMPLETED? ──────────┐
         │            │                 │
         │           YES                │
         │            ▼                 │
         │  ┌──────────────────────┐ S2 │
         │  │ TENTATIVE FUEL       │    │
         │  │ CONSUMPTION          │    │
         │  │ ACQUISITION PROCESSING│   │
         │  └──────────────────────┘    │
         │            │                 │
         │            ▼                 │
         │  ┌──────────────────┐ S3     │
         │  │ ACQUIRE ENGINE-  │        │
         │  │ START FUEL       │        │
         │  │ CONSUMPTION      │        │
         │  └──────────────────┘        │
```

START

IDLING STOP COMPLETED? — S1 — NO

YES

TENTATIVE FUEL CONSUMPTION ACQUISITION PROCESSING — S2

ACQUIRE ENGINE-START FUEL CONSUMPTION — S3

TENTATIVE FUEL CONSUMPTION ≥ ENGINE-START FUEL CONSUMPTION? — S4 — NO

ACQUIRE IDLING STOP POSITION — S6

FIRST TIME? — S7 — NO

YES

ASSIGN POINTS — S8

STORE IN NON-REDUCTION POSITION — S9

YES

ASSIGN POINTS DEPENDING ON REDUCTION EFFECT — S5

CALCULATE IDLING STOP TIME REQUIRED TO OBTAIN REDUCTION EFFECT (EFFECTIVE IDLING STOP TIME) — S10

PROVIDE GUIDANCE ON EFFECTIVE IDLING STOP TIME — S11

END

# FIG.4

PERFORM AN IDLING STOP
FOR AT LEAST XX SECONDS

INFORMATION
DESTINATION
CURRENT POSITION
AV
SETTINGS

# FIG.5

TENTATIVE FUEL CONSUMPTION
ACQUISITION PROCESS

S21

ACQUIRE FUEL CONSUMPTION
PER UNIT TIME IMMEDIATELY
BEFORE IDLING STOP

S22

ACQUIRE IDLING STOP TIME

S23

CALCULATE TENTATIVE
FUEL CONSUMPTION

RETURN

# F I G . 6

START

S31

VEHICLE IDLING? → NO

YES

S32

ACQUIRE VEHICLE STOPPED POSITION

S33

IDLING STOP WITH NO REDUCTION EFFECT PERFORMED BEFORE AT SAME POSITION? → NO

YES

S34

ACQUIRE POSSIBLE IDLING STOP TIME

S35

POSSIBLE IDLING STOP TIME ACQUIRED? → NO

YES

S36

ACQUIRE FUEL CONSUMPTION PER UNIT TIME DURING IDLING

S37

CALCULATE EFFECTIVE IDLING STOP TIME

S38

COMPARE POSSIBLE IDLING STOP TIME AND EFFECTIVE IDLING STOP TIME

S39

PROVIDE GUIDANCE ON DETERMINATION RESULT OF PERFORMING IDLING STOP

END

# F I G . 7

Europäisches
Patentamt

European
Patent Office

Office européen
des brevets

**EUROPEAN SEARCH REPORT**

Application Number

EP 10 17 0693

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/021222 A1 (MINAMI KATSUAKI [JP] ET AL) 27 January 2005 (2005-01-27)<br><br>* abstract *<br>* paragraph [0006] - paragraph [0007] *<br>* paragraph [0016] - paragraph [0017] *<br>* paragraph [0040] - paragraph [0049] *<br>* paragraph [0077] - paragraph [0082] *<br>* paragraph [0097] - paragraph [0098] *<br>* paragraph [0118] *<br>* paragraph [0131] - paragraph [0132] *<br>* paragraph [0150] - paragraph [0152] *<br>* paragraph [0160] - paragraph [0162] *<br>* paragraph [0180] *<br>* figures 1,6,8,10 *<br>----- | 1,2,4,6, 7,9,11, 12 | INV.<br>G07C5/00<br>F02B77/08<br>B60R16/023 |
| A | EP 1 562 152 A2 (PIONEER CORP [JP]) 10 August 2005 (2005-08-10)<br>* abstract *<br>* paragraph [0006] - paragraph [0008] *<br>* paragraph [0017] - paragraph [0018] *<br>* paragraph [0043] - paragraph [0047] *<br>* paragraph [0069] *<br>* figures *<br>----- | 1-12 | |
| A | US 2007/073468 A1 (TSUKAMOTO AKIRA [JP] ET AL) 29 March 2007 (2007-03-29)<br>* abstract *<br>* paragraph [0007] *<br>* paragraph [0022] - paragraph [0030] *<br>* paragraph [0035] - paragraph [0038] *<br>* figures *<br>-----<br>-/-- | 1-12 | TECHNICAL FIELDS SEARCHED (IPC)<br><br>G07C<br>F02B<br>B60R |

The present search report has been drawn up for all claims

| Place of search | Date of completion of the search | Examiner |
|---|---|---|
| Munich | 5 October 2010 | Königer, Axel |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

**EUROPEAN SEARCH REPORT**

Application Number

EP 10 17 0693

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 193 134 A2 (PIONEER CORP [JP]) 3 April 2002 (2002-04-03) * paragraph [0006] * * paragraph [0013] - paragraph [0017] * * paragraph [0022] - paragraph [0031] * * paragraph [0117] - paragraph [0120] * * paragraph [0130] - paragraph [0132] * * paragraph [0170] - paragraph [0172] * * figures * ----- | 1-12 | |
| | | | **TECHNICAL FIELDS SEARCHED (IPC)** |

The present search report has been drawn up for all claims

| Place of search | Date of completion of the search | Examiner |
|---|---|---|
| Munich | 5 October 2010 | Königer, Axel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT**
**ON EUROPEAN PATENT APPLICATION NO.**                   EP 10 17 0693

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2010

| Patent document cited in search report | | Publication date | Patent family member(s) | | Publication date |
|---|---|---|---|---|---|
| US 2005021222 | A1 | 27-01-2005 | NONE | | |
| EP 1562152 | A2 | 10-08-2005 | JP | 2005222417 A | 18-08-2005 |
| | | | US | 2005234772 A1 | 20-10-2005 |
| US 2007073468 | A1 | 29-03-2007 | JP | 2007118926 A | 17-05-2007 |
| EP 1193134 | A2 | 03-04-2002 | JP | 2002104023 A | 09-04-2002 |
| | | | US | 2002062191 A1 | 23-05-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005222417 A